# EUROPÄISCHE PATENTSCHRIFT

(11) **EP 3 446 185 B1**
(45) Veröffentlichungstag und Bekanntmachung des Hinweises auf die Patenterteilung: **25.08.2021**
(21) Anmeldenummer: 17727173.1
(22) Anmeldetag: 26.05.2017
(51) Int. Cl.: G05B 19/418

(54) **VERFAHREN UND VORRICHTUNG ZUR GESTALTUNG EINES PRODUKTIONSPROZESSES ZUM PRODUZIEREN EINES AUS MEHREREN TEILPRODUKTEN ZUSAMMENGESETZTEN PRODUKTS**
METHOD AND APPARATUS FOR DESIGNING A PRODUCTION PROCESS FOR PRODUCING A PRODUCT COMPOSED OF SEVERAL PART PRODUCTS
PROCÉDÉ ET DISPOSITIF POUR LA CONCEPTION D'UN PROCÉDÉ DE PRODUCTION POUR LA PRODUCTION D'UN PRODUIT COMPOSÉ DE PLUSIEURS COMPOSANTS

(30) Priorität: 28.06.2016 DE 102016211554
(43) Veröffentlichungstag der Anmeldung: 27.02.2019
(73) Patentinhaber: Siemens Aktiengesellschaft, 80333 München (DE)
(72) Erfinder: ALBRECHT, Sebastian, 85399 Hallbergmoos (DE); FEITEN, Wendelin, 85579 Neubiberg (DE)
(86) Internationale Anmeldenummer: PCT/EP2017/062735
(87) Internationale Veröffentlichungsnummer: WO 2018/001650

(56) Entgegenhaltungen:
- EP-A2- 2 990 894
- DE-A1- 10 240 338
- US-A- 5 523 960
- US-A1- 2006 265 257

## Beschreibung

Die Erfindung betrifft ein Verfahren und eine Vorrichtung zur Gestaltung eines Produktionsprozesses zum Produzieren eines aus mehreren Teilprodukten zusammengesetzten Produkts in einem mehrere Produktionsmodule aufweisenden Produktionssystem.

Außerdem betrifft die Erfindung ein Computerprogramm bzw. ein Computerprogrammprodukt und ein computerlesbares Medium.

Zeitgemäße Produktionssysteme bzw. Produktionsanlagen zur Herstellung oder Bearbeitung von technischen Produkten weisen in der Regel eine Vielzahl von spezifischen interagierenden Produktionsmodulen auf und werden zunehmend komplexer. An einem zu produzierenden, zu bearbeitenden oder zusammenzusetzenden Produkt sind in der Regel eine Vielzahl von Bearbeitungs-, Produktions-, Montage- oder Handhabungsschritten auszuführen, wofür im Produktionssystem eine Vielzahl von darauf spezialisierten Produktionsmodulen, wie z.B. Roboter, CNC-Maschinen, 3D-Drucker, Reaktoren, Brenner, Heizanlagen oder Förderbänder vorgesehen sind. Ein solches Produkt kann beispielsweise ein Werkstück oder Produkt in verschiedenen Phasen eines Fertigungs-, Bearbeitungs- oder Verarbeitungsprozesses sein und insbesondere auch ein Ausgangs-, Vor-, Zwischen- oder Endprodukt. Zusammengesetzte Produkte werden dabei in der Regel durch Montage mehrerer Vor- bzw. Zwischenprodukte zusammengesetzt.

Es ist bekannt, Produktionsprozesse für ein Produktionssystem mittels zentraler Planungs- und Ausführungsinstanzen zu planen und auszuführen. Dabei werden komplexe zusammengesetzte Produkte häufig mittels sogenannter CAD-Systeme geometrisch modelliert. Die Planung eines konkreten prozeduralen Ablaufs der Montage und Bearbeitung der zusammengesetzten Produkte durch ein komplexes Produktionssystem erfordert jedoch in der Regel noch eine Vielzahl von weiteren Benutzerentscheidungen und Benutzereingriffen. Insbesondere sind die spezialisierten Produktionsmodule eines Produktionssystems häufig in modulspezifischer und/oder produktspezifischer Weise durch einschlägige Experten zu programmieren.

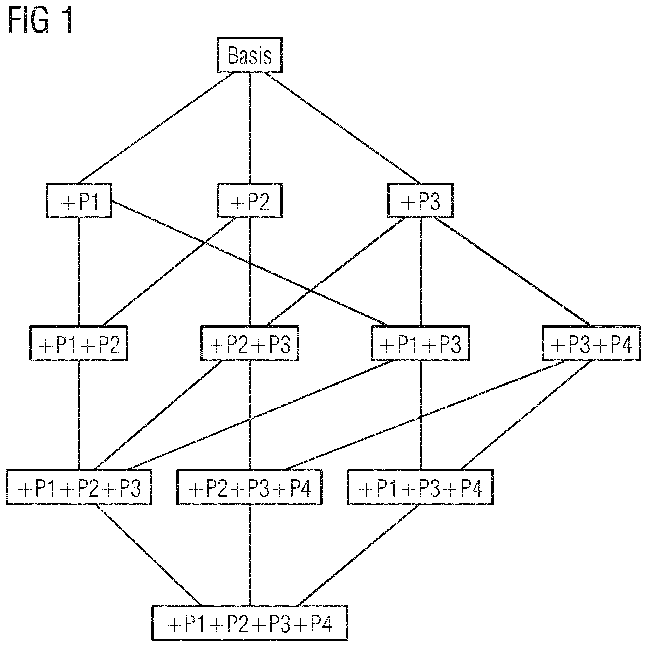

Es ist möglich, dass eine solche Planung mit Hilfe einer Prozess-Graphen-Darstellung durchzuführen. Dabei entspricht jeder Knoten einem Prozess. Die Knoten sind mit gerichteten oder ungerichteten Kanten miteinander verbunden. Figur 1 zeigt hierbei ein Beispiel für einen solchen Graphen. Es soll Beispielsweise eine Montageaufgabe ausgeführt werden, bei der in ein Objekt Base 4 Teile P1, P2, P3, P4 integriert bzw. eingefügt werden sollen. Der Produktionsschritt Einfügen von P4 kann erst durchgeführt werden, wenn P3 eingefügt worden ist. Es gibt keine weiteren Abhängigkeiten. Das kann durch die Prozesse +P1 +P2, +P2 +P3, +P1 +P3, +P3 +P4 ausgedrückt werden. Dabei entstehen im Beispiel 12 Knoten und 20 Kanten.

Der Nachteil dieser Graphenstruktur besteht darin, dass die Anzahl der möglichen Vor- bzw. Zwischenprodukte für flexible Produktionsprozesse zu stark zunimmt, so dass der Graph nicht mehr übersichtlich ist und kaum handhabbar ist.

Aus EP 2 990 894 A2 ist ein System zur Visualisierung einer Gruppe von Flugzeugteilen bekannt, bei dem die Seriennummern der Flugzeugteile kontrolliert werden.

Aus DE 102 40 338 A1 ist ein Verfahren zur Prozessplanung von Fertigungsschritten mit Fertigungsstationen insbesondere für die Automobilindustrie bekannt, wobei konvergente Materiallflusstrukturen einsetzbar sind.

Auch diese beiden Druckschriften lösen den oben beschriebenen Nachteil nicht.

In DE 102015205173.0 ist schon ein Verfahren zum Produzieren eines zusammengesetzten Produkts sowie Produktionsmodul und Produktionssteuerung vorgeschlagen worden. Hierbei ist zum Produzieren eines aus mehreren Teilprodukten zusammengesetzten Produkts in einem mehrere Produktionsmodule aufweisenden Produktionssystem bzw. Produktionsanlage vorgesehen, einen Produktmodell-Datensatz mit Daten über für das Produkt und dessen Teilprodukte auszuführende Produktionsschritte zu erzeugen und einem zu produzierenden Produktexemplar zuzuordnen. Die darin offenbarte Organisation der Montageschritte während der Fertigung eines Produktes behandelt neben der eigentlichen dezentralen Organisation der Produktion von (Teil-)Produkten auch eine Strukturierung des Montageprozess es. In der Patentanmeldung wird keine Graphenstruktur für die Strukturierung der Prozesse verwendet.

Es ist Aufgabe der Erfindung, die eingangs erwähnten Probleme zu überwinden.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zur Gestaltung eines Produktionsprozesses zum Produzieren eines aus mehreren Teilprodukten zusammengesetzten Produkts in einem mehrere Produktionsmodule aufweisenden Produktionssystem, aufweisend folgende Schritte:
- Erzeugen eines Prozessmodells mit Daten über für das Produkt und dessen Teilprodukte auszuführende Produktionsschritte,
- aus welchem Daten über wenigstens einen Produktionsschritt ausgelesen werden und jeweils ein zum Ausführen des jeweiligen Produktionsschritts verfügbares und zugehöriges Produktionsmodul ermittelt wird und
- Bereitstellen über eine Signalverbindung von dem jeweiligen Produktionsschritt entsprechenden Anweisungen für das Produktionsmodul,
- wobei das Prozessmodell durch einen Graphen repräsentiert wird, welcher eine Mehrzahl von über Kanten verbundenen Knoten umfasst, wobei jeder Knoten einen Prozessschritt beschreibt und die Knoten über die Kanten derart miteinander verbunden werden, dass die zwischen den Produktionsschritten bestehenden Abhängigkeiten mit Hilfe der Kanten graphisch dargestetllt werden, wobei die Anordnung der Kanten eine partielle Ordnung widerspiegelt.

Es kann eine Graphenstruktur erzeugt werden, die zur Organisation von Produktionsschritten während der Produktion bzw. Fertigung eines Produktes verwendet wird. Die Anordnung der Kanten in dem Graphen spielt eine partielle Ordnung wider.

Erfindungsgemäß ist eine minimale und zugleich vollständige Darstellung aller möglichen Produktionsprozesse vorgesehen, wobei einzelne Produktionsschritte einer partiellen Ordnung unterliegen.

Wenn eine erste Kante einem Knoten vorgeordnet ist und eine zweite Kante demselben Knoten nachgeordnete ist, ist der mit der ersten Kante repräsentierte Prozessschritt vor dem mit der zweiten Kante repräsentierten Prozessschritt auszuführen. Dies wird als sequentielle Ordnung bezeichnet.

Zusätzlich kann zur Vor- und Nachordnung einer Kante eine Bedingung ggf. von Seiten des Nutzers vorgegeben werden bzw. vordefiniert sein. Unter dieser ist der erste Prozessschritt vor dem zweiten Prozessschritt auszuführen. Dies wird als konditionale Ordnung bezeichnet.

Eine partielle Ordnung der (Teil-)Prozesse beschreibt, ob ein Produktionsschritt bzw. (Teil-)Prozess sequentiell vor einem anderen Produktionsschritt oder nur konditional - z.B. nur unter einer bestimmten Ausrichtung bzw. Orientierung von einzufügenden Objekten bzw. Teilen - ausgeführt werden kann.

Die Darstellung erlaubt eine Verifikation und Modifikation der einzelnen Produktionsprozesse auf der Ebene der einzelnen Produktionsschritte.

In den Knoten kann die Art des Prozessschritts und die für die Produktion eines Teilprodukts benötigten Objekte angegeben werden.

Die Knoten, Kanten und Beschreibungen der Knoten und Kanten können derart formalisiert sein, dass das Prozessmodell maschinenlesbar ist. Große Produktionsaufgaben können in Teilaufgaben mittels entsprechender auf Graphen beruhender Algorithmen (z.B. Min-Cut) automatisch strukturiert werden. Dadurch werden die Rechenzeiten zum Finden von gültigen Produktionsprozessen mittels computerimplementierter Planerwerkzeuge reduziert.

Das Prozessmodell kann in Teilprozessmodelle unterteilt werden kann. Die Unterteilung des Prozessmodells kann in Teilprozessmodelle mittels des sogenannten Min-Cut-Algorithmus durchgeführt werden. Durch die Unterteilung des Prozessmodells in Teilprozessmodelle können ggf. automatisch Inkonsistenzen und Unvollständigkeiten im Prozessmodell erkannt werden.

Ein Schnitt bezeichnet in der Graphentheorie nichtleere Teilmenge der Knotenmenge eines Graphen. Ein minimaler Schnitt (min-cut) liegt vor, wenn nach dem Entfernen der Kanten des Schnitts aus dem Graph genau zwei Zusammenhangskomponenten entstehen. Es kann gezeigt werden, dass das genau dann der Fall ist, wenn eine Knotenmenge so gewählt werden kann, dass der von ihr induzierte Schnitt keine Teilmengen an Kanten enthält, die einen von einer anderen Knotenmenge induzierten Schnitt bilden. Mit anderen Worten ausgedrückt: Ein Schnitt ist dann minimal, wenn nicht bereits eine Teilmenge des Schnitts einen Schnitt bildet.

Ein weiterer Aspekt der Erfindung ist eine Vorrichtung ausgebildet mit Mittel bzw. Einheiten zur Ausführung der vorstehend beschriebenen Verfahrensschritt, die vorzugsweise zur interaktiven Nutzung die vorstehend erläuterte Graphendarstellung an einer Ausgabeeinrichtung z.B. ein Bildschirm oder auch ein mobiles Tablet, ausgibt und visualisiert.

Die Vorrichtung zur Gestaltung eines Produktionsprozesses zum Produzieren eines aus mehreren Teilprodukten zusammengesetzten Produkts in einem mehrere Produktionsmodule aufweisenden Produktionssystem, weist dabei auf:
- eine Erzeugungseinheit zum Erzeugen eines Prozessmodells mit Daten über für das Produkt und dessen Teilprodukte auszuführende Produktionsschritte,
- aus welchem Daten über wenigstens einen Produktionsschritt auslesbar sind und jeweils ein zum Ausführen des jeweiligen Produktionsschritts verfügbares und zugehöriges Produktionsmodul ermittelbar ist, und
- eine Bereitstellungseinheit zum Bereitstellen über eine Signalverbindung von dem jeweiligen Produktionsschritt entsprechenden Anweisungen für das Produktionsmodul, dadurch gekennzeichnet, dass das Prozessmodell durch einen Graphen repräsentiert ist, welcher eine Mehrzahl von über Kanten verbundenen Knoten umfasst, wobei jeder Knoten einen Prozessschritt beschreibt und die Knoten über die Kanten derart miteinander verbunden sind, dass die zwischen den Produktionsschritten bestehenden Abhängigkeiten mit Hilfe der Kanten graphisch dargestellt sind, wobei die Anordnung der Kanten eine partielle Ordnung widerspiegelt.

Die Vorrichtung kann wie das oben beschriebene Verfahren entsprechend weitergebildet werden und weist dieselben Vorteile auf.

Zudem kann die Vorrichtung mit einer Eingabevorrichtung bzw. Bedienoberfläche gekoppelt oder die Eingabevorrichtung in die Vorrichtung integriert sein. Mit der Eingabevorrichtung lassen sich mit Hilfe von Nutzereingaben die Knoten und Kanten des Prozessmodells eingegeben, verändern und löschen. Mittels der Eingabevorrichtung ist die Unterteilung des Prozessmodells in Teilprozessmodelle durchführbar. Mittels der Eingabevorrichtung sind verschiedene Ansichten auf das Prozessmodell und gegebenenfalls auf dessen Teilprozessmodelle auswählbar. Die graphische Benutzeroberfläche ermöglicht es Teilgraphen des Prozessgraphen leicht zu restrukturieren: Gerichtete Kanten zwischen Knoten des Prozessgraphen lassen sich per Knopfdruck umkehren oder löschen/hinzufügen. Damit lässt sich ein Prozessgraph in Teilgraphen zerlegen und diese dann neu anzuordnen. Zudem ist es möglich mehrere Prozessgraphen zu einem zu kombinieren.

Desweiteren kann durch Auswählen eines Knotens im Prozessgraphen können die hinterlegten Informationen (z.B. benötigte Teilprodukte oder Werkzeuge) angezeigt und editiert werden. Auf diese Weise ist es möglich leicht einen Prozessgraphen anzupassen oder zu verfeinern. Die graphische Darstellung ermöglicht es, dem Nutzer leicht zu erkennen, ob erwartete Strukturen wie etwa Symmetrien oder Blockbildungen richtig im Modell enthalten sind. Damit können Inkonsistenzen und Unvollständigkeiten, welche zu Entwurfsfehlern führen können, erkannt werden. Es ist denkbar, diese Inkonsistenzen und Unvollständigkeiten dem Nutzer automatisch beispielsweise farblich kenntlich zu machen.

Ein weiterer Aspekt der Erfindung ist eine technische Anlage, für die die Produktionsplanung vorgenommen wird. Solch eine Anlage kann eine Automatisierungsanlage bzw. eine Produktionsanlage sein.

Die Komponenten einer solchen Anlage können den Anlagentyp spezifizieren.

Die Vorrichtung sieht Mittel bzw. Einheiten zur Durchführung des oben genannten Verfahrens vor, die jeweils hardwaremäßig und/oder firmwaremäßig und/oder softwaremäßig bzw. als Computerprogramm bzw. Computerprogrammprodukt ausgeprägt sein können.

Ein weiterer Aspekt der Erfindung ist ein Computerprogrammprodukt bzw. ein Computerprogramm mit Mitteln zur Durchführung des oben genannten Verfahrens, wenn das Computerprogramm(produkt) in einer oben genannten Vorrichtung oder in Mitteln der Vorrichtung zur Ausführung gebracht wird. Das Computerprogramm bzw. -produkt kann auf einem computerlesbaren Medium gespeichert sein. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Vorrichtung oder in deren Mitteln integriert sein.

Die Erfindung weist weiterhin folgende Vorteile auf:
Ein hoher Grad an Flexibilität bei Produktionsprozessen kann durch die Graphen-Beschreibung werden. Somit wird das effiziente Hinzufügen von neuen Produktionsprozessen oder Abhängigkeiten in dieser Beschreibung auf Ebene der Prozessschritte (interaktiv) ermöglicht. Es ist jeweils nur ein neuer Knoten oder eine neue Kante hinzuzufügen. Für einen Prozessknoten können interaktiv die Art des Prozesses und die verwendeten Teile ausgewählt werden. Es lassen sich Zwischenprodukte oder die relevanten Teile von Zwischenprodukten visualisieren. Damit wird die Prozessstruktur für einen Nutzer übersichtlich und nachvollziehbar gemacht. Insgesamt reduziert sich der Aufwand und die Häufigkeit von Fehlern bzw. einer Fehlplanung im Vergleich zu den eingangs erläuterten Darstellungen mit Zwischenprodukten. Tatsächlich beeinflusst eine solche Graphendarstellung die Produktionsprozessplanung, die sich wiederum bei der Durchführung der Prozessschritte in Fertigungsanlage auswirkt. So können Fehler im Prozessmodell, d.h. in Graphen nachteilige Konsequenzen schwerwiegende Störungen im realen Produktionsablauf mit sich bringen.

Weitere Vorteile, Einzelheiten und Weiterbildungen der Erfindung ergeben sich aus der nachfolgenden Beschreibung von Ausführungsbeispielen in Verbindung mit den Zeichnungen.

Es zeigen:
- Figur 1: das eingangs erläuterte Beispiel,
- Figur 2: eine Graphendarstellung mit zwei Prozessgraphen,
- Figur 3: eine Materialliste für ein Montagebeispiel,
- Figur 4: eine Abfolge von Montage-Fertigkeiten,
- Figur 5: ein Beispiel für einen Prozessgraphen für eine Montagezusammensetzung,
- Figur 6: ein weiteres Beispiel für einen Prozessgraphen für eine weitere Montagezusammensetzung unter Berücksichtigung einer weiteren Vorgabe,
- Figur 7: einen Beispielgraphen mit Bedienoberfläche als Screenshot (Schnappschuss von der Bildschirmdarstellung) und
- Figur 8: veranschaulicht ein Produktionssystem.

Ein Produktionsprozess - z.B. für eine Montagezusammensetzung für ein Spielzeugauto - lässt sich gemäß der Erfindung in Form einer Graphenstruktur unter Berücksichtigung der Produktionsschritte und deren Abhängigkeiten darstellen. Es wird ermöglicht, die Vielzahl der in einer flexiblen Produktionsanlage realisierbaren Zwischenprodukte nicht explizit angeben zu müssen. Dadurch erhält der Nutzer für Produktionsprozesse mit einer Vielzahl an Schritten eine gut überschaubare Darstellung, welche den Nutzer zu kaum einem Fehler verleitet.

In einer Produktionsstätte bzw. in einem Produktionssystem PS sind normalerweise sogenannte Produktionsmodule angeordnet, die das Produzieren und/oder die Steuerung der Produktion eines Produkts durchführen können. Das Produkt kann dabei aus mehreren Teilprodukten, unter anderem Zwischen- und Endprodukte, zusammengesetzt sein. Es kann ein Prozessmodell erzeugt werden, das dazu verwendet wird, aus diesem einen oder mehrere in einer bestimmten Reihenfolge abzuarbeitenden Produktionsschritt abzuleiten. Zudem wird über eine Signalverbindung S dem Produktionsmodul, z.B. PM1 Anweisungen A erteilt, die den entsprechenden Schritt in der Produktion einleiten.

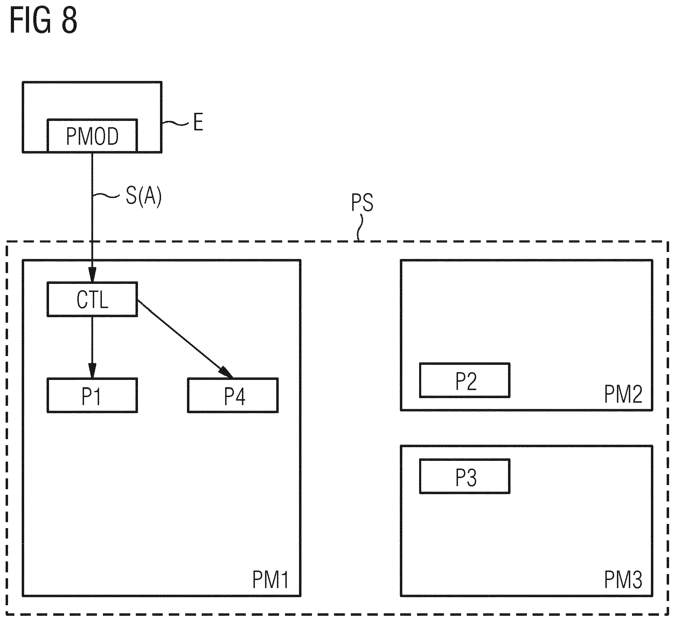

Figur 8 veranschaulicht ein Produktionssystem PS mit einer Vielzahl von Produktionsmodulen, hier PM1, PM2 und PM3 zum Produzieren eines aus mehreren Teilprodukten zusammengesetzten Produkts. Das Produkt und dessen Teilprodukte können jeweils ein beliebiges körperliches Produkt bzw. Teilprodukt oder Werkstück in verschiedenen Phasen eines Fertigungs-, Bearbeitungs- und/oder Verarbeitungsprozesses sein, insbesondere auch ein Ausgangs-, Vor-, Zwischen- oder Endprodukt. Das Produktionssystem PS kann z.B. eine Fertigungsanlage sein.

Als Produktionsmodule PM1, PM2 und PM3 können insbesondere Vorrichtungen des Produktionssystems PS vorgesehen sein, die zur Produktion, Bearbeitung, Montage, Verarbeitung und/oder Handhabung des Produkts und/oder dessen Teilprodukten beitragen. Die Produktionsmodule PM1, PM2 und PM3 können dabei jeweils spezifische Funktionalität aufweisen. Beispiele hierfür sind insbesondere Roboter, CNC-Maschinen, 3D-Drucker, Reaktoren, Brenner, Heizanlagen und Förderbänder oder andere Transportmodule. Insbesondere können die Produktionsmodule PM1, PM2 und PM3 sogenannte Cyber Physical Modules oder Cyber Physical Production Modules sein.

Die Produktionsmodule PM1, PM2 und PM3 enthalten jeweils eine Produktionssteuerung CTL, um unter anderem einen Ablauf der Produktion von Produkten zu steuern. Im vorliegenden Ausführungsbeispiel ist die Produktionssteuerung CTL Teil eines Produktionsmoduls, hier PM1. PM2 bzw. PM3 können analog ausgebildet sein. Alternativ oder zusätzlich kann die Produktionssteuerung CTL auch zentraler oder dezentraler Teil des gesamten Produktionssystems PS sein. Eine modulspezifische Produktionssteuerung CTL erlaubt eine dezentrale Ablaufsteuerung, die in vielen Fällen sehr flexibel und schnell auf Änderungen im Produktionsprozess reagieren kann.

Die Produktionsmodule PM1, PM2 und PM3 können Produktionsschritte P1, P2, P3, P4 z.B. ein Bereitstellen von Material, Bohren, Schleifen, Fräsen, ein Zusammensetzen von Teilproduktexemplaren und/oder Transportdienste, ausführen.

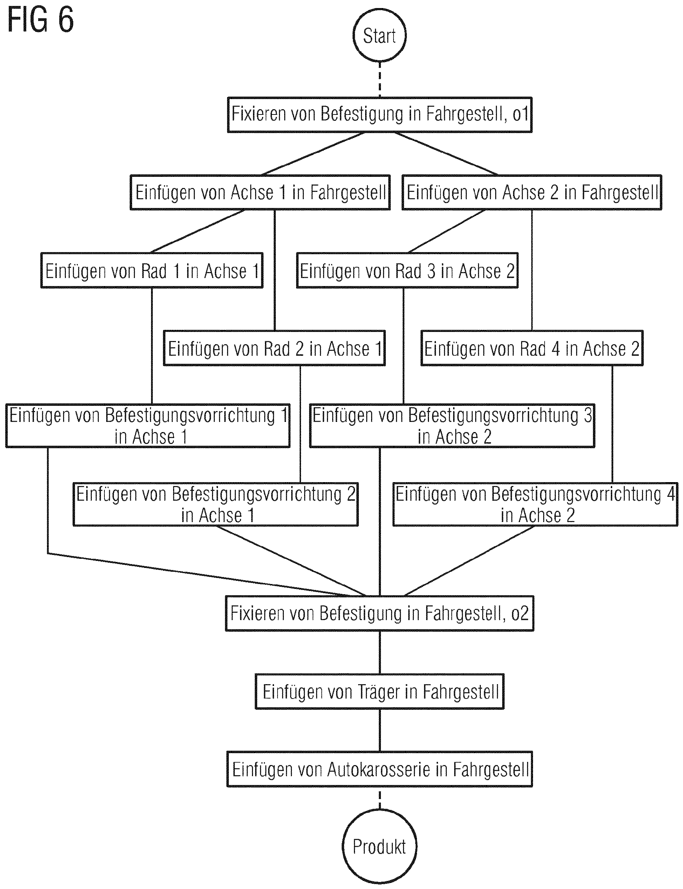

Zur Produktion des Produkts wird einem ersten Produktionsmodul, hier PM1, des Produktionssystems PS ein Prozessmodell PMOD übermittelt. Das Prozessmodell PMOD ist dem zu produzierenden Produkt zugeordnet und umfasst eine formale semantische Beschreibung der für das Produkt und dessen Teilprodukte auszuführenden Produktionsschritten z.B. P1, P2, P3, P4. Anhand des Prozessmodells PMOD wird durch die Produktionssteuerung CTL, die über eine Signalverbindung S von dem jeweiligen Produktionsschritt P1 entsprechende Anweisungen A erhält, ein Prozessschritt P1 oder P4 eingeleitet. Die Abhängigkeit, ob Prozessschritt P4 vor P1 oder z.B. P1 vor P4 ablaufen soll, ist in dem, vorzugsweise maschinenlesbaren Prozessmodell PMOD angegeben. Dieses Prozessmodell ist hier im Bespiel als ein Graph (siehe z.B. Figur 6) ausgebildet. Der Graph umfasst eine Mehrzahl von über Kanten verbundenen Knoten, wobei jeder Knoten einen Prozessschritt beschreibt und die Knoten über die Kanten derart miteinander verbunden werden, dass die zwischen den Produktionsschritten bestehenden Abhängigkeiten mit Hilfe der Kanten ausgedrückt werden.

In der Produktionssteuerung CTL wird unter anderem auch ermittelt, welches Produktionsmodul des Produktionssystems PS zum Ausführen eines jeweiligen Produktionsschritts verfügbar ist. Zu diesem Zweck wird ein jeweiliger Produktionsschritt mit Fähigkeiten der Produktionsmodule des Produktionssystems PS verglichen, und bei Eignung eines Produktionsmoduls wird dessen Verfügbarkeit ggf. dynamisch ausgehandelt.

Erfindungsgemäß ist eine Vorrichtung zur Gestaltung eines Produktionsprozesses zum Produzieren eines aus mehreren Teilprodukten zusammengesetzten Produkts in einem mehrere Produktionsmodule aufweisenden Produktionssystem PS, vorgesehen, welche aufweist:
- eine Erzeugungseinheit E zum Erzeugen eines Prozessmodells mit Daten über für das Produkt und dessen Teilprodukte auszuführende Produktionsschritte,
- aus welchem Daten über wenigstens einen Produktionsschritt auslesbar sind und jeweils ein zum Ausführen des jeweiligen Produktionsschritts verfügbares und zugehöriges Produktionsmodul ermittelbar ist, und
- eine in den Figuren nicht dargestellte Bereitstellungseinheit, bei die Bereitstellungseinheit in die Erzeugungseinheit E integriert sein kann, zum Bereitstellen über eine Signalverbindung S von dem jeweiligen Produktionsschritt entsprechenden Anweisungen A - in Figur 8 mit S(A) bezeichnet - für das Produktionsmodul,
- wobei das Prozessmodell durch einen Graphen repräsentiert ist, welcher eine Mehrzahl von über Kanten verbundenen Knoten umfasst, wobei jeder Knoten einen Prozessschritt beschreibt und die Knoten über die Kanten derart miteinander verbunden sind, dass die zwischen den Produktionsschritten bestehenden Abhängigkeiten mit Hilfe der Kanten dargestellt sind.

Analog sind die vorstehend beschriebenen und beanspruchten Verfahrensschritte vorgesehen, die von der Vorrichtung ausgeführt werden können. Zudem kann ein Computerprogramm in der Vorrichtung geladen werden bzw. ausgeführt werden, dessen Befehle bzw. Instruktionen die Durchführung der beanspruchten Verfahrensschritte bewirken.

Die in den Figuren nicht dargestellte Vorrichtung kann mit der Erzeugungseinheit E gekoppelt sein oder diese umfassen.

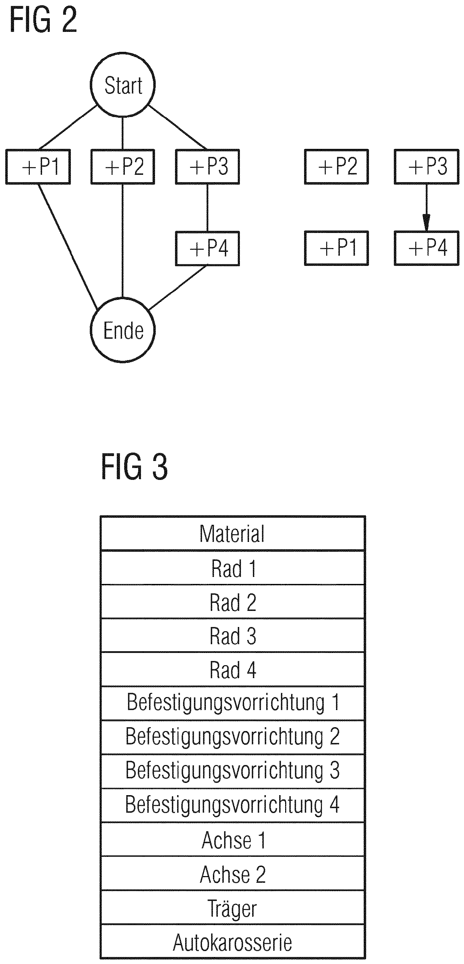

In Figur 2 zeigt eine mögliche Darstellung des oben genannten Graphen mit zwei Prozessgraphen, wobei jeder Knoten zu einem Prozess gehört und die Knoten mit Kanten miteinander verbunden sind. Hierbei spielt die partielle Ordnung, d.h. welche Prozess bereits abgeschlossen sein muss, bevor ein weiterer Prozess beginnt, eine entscheidende Rolle. So weist dieser Graph im Beispiel nur 6 Knoten und 7 Kanten auf, jedoch fehlt nun eine Verbindung zwischen den links illustrierten und den rechts gezeigten Graphen.

Hierbei können die Kanten als gerichtete Kanten betrachtet werden, die die Abhängigkeiten in der Reihenfolge der einzelnen Prozessschritte P1 bis P4 wiedergibt.

Die strukturierte Erstellung von Prozessgraphen mit der graphischen Bedienoberfläche ermöglicht es, die einzelnen Prozessschritte mit in Ontologien hinterlegten Konzepten zu verknüpfen. Derartige Strukturen können dann genutzt werden, um zu überprüfen, ob ein erstellter Prozessgraph durchführbar ist. Durch schrittweise Hinzunahme der einzelnen teilgeordneten bzw. partiell geordneten Prozessschritte ist es zudem möglich, einen Knoten im Prozessgraphen zu identifizieren, dessen vor- und/oder nachgeordneten Prozessschritte nicht durchführbar ist. Eine derartige automatische Überprüfung ermöglicht es, schnell zu erkennen, ob einzelne Prozessschritte im Prozessgraphen fälschlicherweise ausgelassen wurden oder ob eine im Prozessgraphen angegebene Teilordnung nicht durchführbar ist. Diese direkte Überprüfbarkeit reduziert wesentlich die Fehleranfälligkeit in der Modellierung von Prozessen und liefert damit eine höhere Entwurfssicherheit.

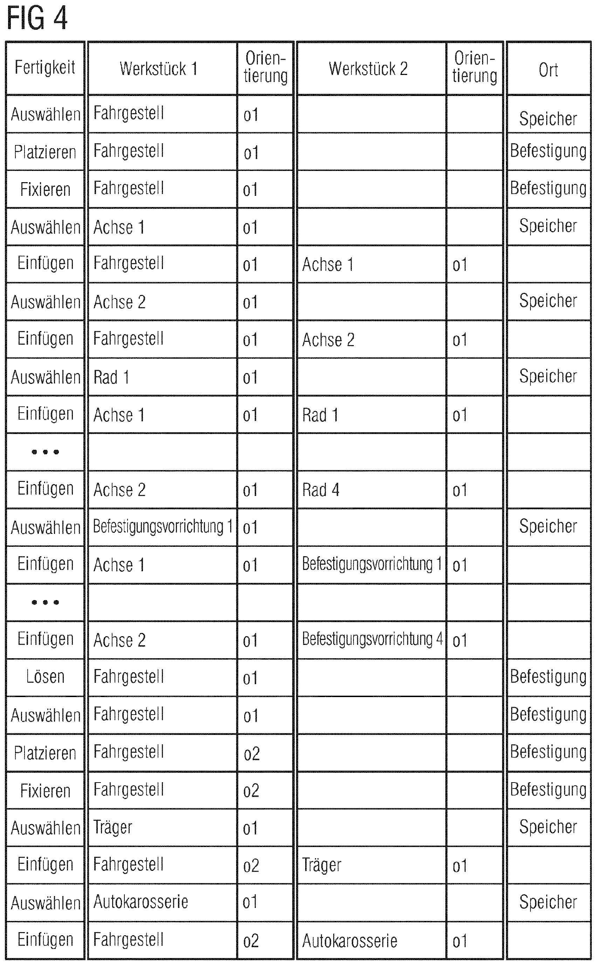

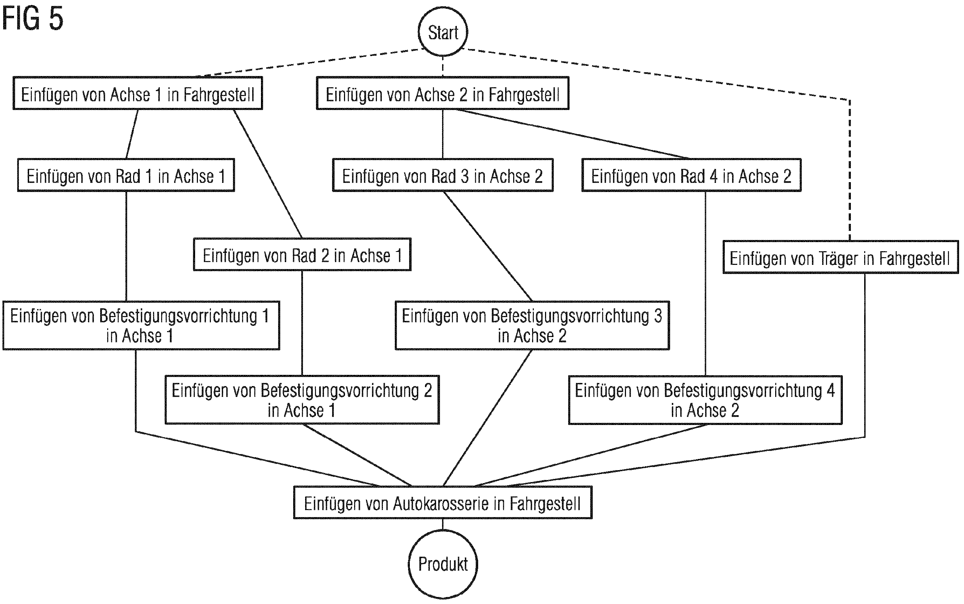

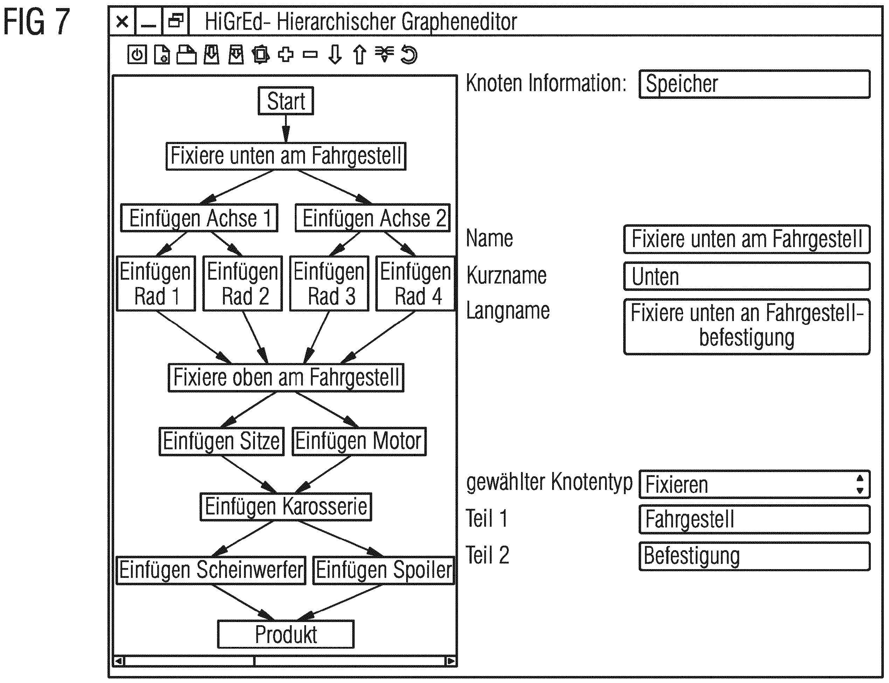

In Figur 3 sind beispielhaft Materialien bzw. Teile zur Montage in einer Tabelle dargestellt:
Rad 1 bis Rad 4 (wheel), Befestigungsvorrichtung (pin) 1 bis 4, Achse (axle) 1 und 2, Träger (bar), Autokarosserie (carbody). Eine partielle Ordnung bzw. Abhängigkeit besteht darin, dass die Karosserie und der Träger von einer entgegengesetzten Seite als die anderen Teile an das Fahrgestell montiert werden. Die Orientierung ist hier nur implizit ausgedrückt. So wird angegeben, dass eine Orientierung in den Prozess mit Orientierungsinformation eingeführt wird, jedoch der Orientierungsprozess nicht explizit im Graphen dargestellt wird. Es wird im Beispiel angenommen, dass jede Einfügung erledigt werden kann, wenn das Fahrgestell an der Montagehalterung in der richtigen Orientierung platziert ist. In Figur 5 illustriert dementsprechend eine Graphendarstellung ohne Orientierung und Figur 6 eine Graphendarstellung mit der Vorgabe einer Orientierung. In Figur 7 ist eine Abfolge an Montage-fertigkeiten gezeigt. Fertigkeiten (skills) sind beispielsweise auswählen (pick), platzieren (place), fixieren (fix), lösen (unfix) und einfügen (insert). Gemäß der Tabelle in Figur 4 wird in den Spalten folgendes angegeben:
Fertigkeit (skill), erstes Werkstück bzw. (Montage-)Teil (piece 1), Orientierung (Orientation) o1 des ersten Teils, zweites Teil (piece 2), Orientierung o2 des zweiten Teils und Ort (Location), an dem das erste Teil zu finden ist. Orte können Lager bzw. Speicher (storage) oder auch Befestigung (fixture) sein.

In den Figuren 5 und 6 sind die Montage-Prozesse am Fahrzeuggestell graphisch dargestellt. Gemäß den Figuren 5 und 6 ist jeder Prozessschritt ein Knoten in dem Graphen und die Kanten geben die (partielle) Ordnung (sequentiell oder konditional bzw. unter einer Bedingung) inklusive potentieller AND/OR Beziehungen wieder. Ein Montage-Schritt ist beispielsweise "Einfügen von Achse 1 in Fahrgestellt", das in den Figuren 5 und 6 mit insert(chassis, axle1) ausgedrückt wird. Andere Prozessschritte werden analog dargestellt. Die Anzahl der Knoten und Kanten kann in dieser Graphendarstellung auf ein Minimum reduziert und erlaubt, die Produktionsstruktur zu erkennen, ohne Produktionsschritte oder Varianten zu vernachlässigen.

Diese oben erläuterten Graphenstrukturen sind maschinenlesbar und damit geeignet, als Eingabe für entsprechende Programme/Planerwerkzeuge zur Produktionsplanung verwendet zu werden. Es ist möglich, diese Graphenstruktur als Eingabegröße, beispielsweise als Produktmodell(-Datensatz), im Zusammenhang mit dem eingangs erwähnten Verfahren aus DE 102015205173.0 zu verwenden. Desweiteren können den Produktionsprozess betreffende Informationen, die durch andere Maschinen, Programme oder Nutzer vor oder während des Ablaufs des Produktionsprozesses zur Verfügung gestellt werden, automatisiert in der Graphendarstellung berücksichtigt werden, da die partiellen Ordnungen der Prozessschritte lokale Änderungen ermöglichen.

Die interaktive Darstellung ermöglicht es zudem, nach Bedarf für Teile oder die vollständige Graphenstruktur zwischen der gemäß der Erfindung minimalen Darstellung und einer auf Zwischenprodukten beruhenden Darstellung beispielsweise der eingangs genannten Art zu wechseln. Damit bleibt eine Kompatibilität zu bestehenden Graphendarstellungen erhalten. Dies ermöglicht zum einen das Einlesen bestehender, auf Zwischenprodukten beruhender Darstellungen bzw. den Vergleich mit diesen. Zum anderen ist eine Abbildung der expliziten Systemzustände während der Produktion möglich.

Figur 7 zeigt einen Beispielgraphen mit Bedien- bzw. Benutzeroberfläche als Screenshot (Schnappschuß) von einem Grapheneditor. Die graphische Benutzeroberfläche kann auch in der Erzeugungseinheit angeordnet bzw. mit dieser gekoppelt sein. Die graphische Benutzeroberfläche ermöglicht es, Teilgraphen des Prozessgraphen leicht zu restrukturieren: Gerichtete Kanten zwischen Knoten des Prozessgraphen lassen sich per Knopfdruck umkehren oder löschen/hinzufügen. Damit lässt sich ein Prozessgraph in Teilgraphen zerlegen und diese dann neu anzuordnen. Zudem ist es möglich mehrere Prozessgraphen zu einem zu kombinieren. Der beispielhafte Graph in Figur 7 weist die Prozessschritte "Fixiere "unten" am Fahrgestellt" (Fix Chassis Bottom). So werden mit Insert Axle 1 und Insert Axle 2 die beiden Achsen unten am Fahrgestellt montiert, danach die Räder (Wheel 1 bis 4) montiert. Am "oberen" Fahrgestell (fix Chassis top) werden die Sitze (Seats) und der Motor (Engine) montiert, dann wird die Karosserie eingesetzt (insert body). Danach folgen die Scheinwerfer (Flash) und Schürzen bzw. Spoiler.

Desweiteren kann durch Auswählen eines Knotens im Prozessgraphen können die hinterlegten Informationen (z.B. benötigte Teilprodukte oder Werkzeuge) angezeigt und editiert werden. Auf diese Weise ist es möglich leicht einen Prozessgraphen anzupassen oder zu verfeinern. Diese graphische Darstellung ermöglicht es dem Benutzer leicht zu erkennen, ob erwartete Strukturen wie etwa Symmetrien oder Blockbildungen richtig im Modell enthalten sind. Prozesse oder Teilprozesse, die mittels eines Prozessgraphen eingegeben wurden, lassen sich zudem automatisch in der klassischen Weise mit Zwischenprodukten darstellen. Zudem kann man Prozesse, die auf die klassische Weise modelliert wurden, in Prozessgraphen umwandeln. Da auf diese Weise die Komplexität in der Darstellung minimiert wird, ermöglicht eine derartige Umwandlung Unstimmigkeiten im klassischen Modell zu erkennen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur Gestaltung eines Produktionsprozesses zum Produzieren eines aus mehreren Teilprodukten zusammengesetzten Produkts in einem mehrere Produktionsmodule (PM1, PM2, PM3) aufweisenden Produktionssystem (PS), aufweisend folgende Schritte:
- Erzeugen eines Prozessmodells (PMOD) mit Daten über für das Produkt und dessen Teilprodukte auszuführende Produktionsschritte (P1, P2, P3, P4),
- aus welchem zumindest ein Teil der Daten über wenigstens einen Produktionsschritt ausgelesen werden und jeweils ein zum Ausführen des jeweiligen Produktionsschritts verfügbares und zugehöriges Produktionsmodul ermittelt wird und
- Bereitstellen über eine Signalverbindung (S) von dem jeweiligen Produktionsschritt entsprechenden Anweisungen (A) für das Produktionsmodul (z.B. PM1),
**dadurch gekennzeichnet, dass**
das Prozessmodell durch einen Graphen repräsentiert wird, welcher eine Mehrzahl von über Kanten verbundenen Knoten umfasst, wobei jeder Knoten einen Prozessschritt beschreibt und die Knoten über die Kanten derart miteinander verbunden werden, dass die zwischen den Produktionsschritten bestehenden Abhängigkeiten mit Hilfe der Kanten graphisch dargestellt werden, wobei
die Anordnung der Kanten eine partielle Ordnung widerspiegelt.

2. Verfahren nach dem vorhergehenden Anspruch, **dadurch gekennzeichnet, dass** wenn eine erste Kante einem Knoten vorgeordnet ist und eine zweite Kante demselben Knoten nachgeordnete ist, der mit der ersten Kante repräsentierte Prozessschritt vor dem mit der zweiten Kante repräsentierten Prozessschritt auszuführen ist.

3. Verfahren nach dem vorhergehenden Anspruch, **dadurch gekennzeichnet, dass** zusätzlich zur Vor- und Nachordnung einer Kante eine Bedingung vorgebbar ist, unter der der erste Prozessschritt vor dem zweiten Prozessschritt auszuführen ist.

4. Verfahren nach einem der vorhergehenden Ansprüche, **dadurch gekennzeichnet, dass** in den Knoten die Art des Prozessschritts und die für die Produktion eines Teilprodukts benötigten Objekte angegeben werden.

5. Verfahren nach einem der vorhergehenden Ansprüche, **dadurch gekennzeichnet, dass** die Knoten, Kanten und Beschreibungen der Knoten und Kanten derart formalisiert sind, dass das Prozessmodell maschinenlesbar ist.

6. Verfahren nach einem der vorhergehenden Ansprüche, **dadurch gekennzeichnet, dass** das Prozessmodell in Teilprozessmodelle unterteilt werden kann.

7. Verfahren nach einem der vorhergehenden Ansprüche, **dadurch gekennzeichnet, dass** zur Unterteilung des Prozessmodells in Teilprozessmodelle mittels des sogenannten Min-Cut-Algorithmus durchgeführt wird.

8. Verfahren nach einem der vorhergehenden Ansprüche 6 oder 7, **dadurch gekennzeichnet, dass** durch die Unterteilung des Prozessmodells in Teilprozessmodelle Inkonsistenzen und Unvollständigkeiten im Prozessmodell erkannt werden können.

9. Vorrichtung zur Gestaltung eines Produktionsprozesses zum Produzieren eines aus mehreren Teilprodukten zusammengesetzten Produkts in einem mehrere Produktionsmodule aufweisenden Produktionssystem (PS), aufweisen:
- eine Erzeugungseinheit (E) zum Erzeugen eines Prozessmodells (PMOD) mit Daten über für das Produkt und dessen Teilprodukte auszuführende Produktionsschritte (P1, P2, P3, P4),
- aus welchem Daten über wenigstens einen Produktionsschritt auslesbar sind und jeweils ein zum Ausführen des jeweiligen Produktionsschritts verfügbares und zugehöriges Produktionsmodul ermittelbar ist, und
- eine Bereitstellungseinheit zum Bereitstellen über eine Signalverbindung (S) von dem jeweiligen Produktionsschritt entsprechenden Anweisungen (A) für das Produktionsmodul (z.B. PM1),
**dadurch gekennzeichnet, dass**
das Prozessmodell durch einen Graphen repräsentiert ist, welcher eine Mehrzahl von über Kanten verbundenen Knoten umfasst, wobei jeder Knoten einen Prozessschritt beschreibt und die Knoten über die Kanten derart miteinander verbunden sind, dass die zwischen den Produktionsschritten bestehenden Abhängigkeiten mit Hilfe der Kanten graphisch dargestellt sind, wobei
die Anordnung der Kanten eine partielle Ordnung widerspiegelt.

10. Vorrichtung nach dem vorhergehenden Anspruch **dadurch gekennzeichnet, dass** wenn eine erste Kante einem Knoten vorgeordnet ist und eine zweite Kante demselben Knoten nachgeordnete ist, der mit der ersten Kante repräsentierte Prozessschritt vor dem mit der zweiten Kante repräsentierten Prozessschritt auszuführen ist.

11. Vorrichtung nach dem vorhergehenden Anspruch, **dadurch gekennzeichnet, dass** zusätzlich zur Vor- und Nachordnung einer Kante eine Bedingung vorgebbar ist, unter der der erste Prozessschritt vor dem zweiten Prozessschritt auszuführen ist.

12. Vorrichtung nach einem der vorhergehenden Vorrichtungsansprüche, **dadurch gekennzeichnet, dass** in den Knoten die Art des Prozessschritts und die für die Produktion eines Teilprodukts benötigten Objekte angegeben sind.

13. Vorrichtung nach einem der vorhergehenden Vorrichtungsansprüche, **dadurch gekennzeichnet, dass** die Knoten, Kanten und Beschreibungen der Knoten und Kanten derart formalisiert sind, dass das Prozessmodell maschinenlesbar ist.

14. Vorrichtung nach einem der vorhergehenden Vorrichtungsansprüche, **dadurch gekennzeichnet, dass** das Prozessmodell in Teilprozessmodelle unterteilt werden kann.

15. Vorrichtung nach einem der vorhergehenden Vorrichtungsansprüche, **dadurch gekennzeichnet, dass** zur Unterteilung des Prozessmodells in Teilprozessmodelle mittels des sogenannten Min-Cut-Algorithmus durchführbar ist.

16. Vorrichtung nach einem der vorhergehenden Vorrichtungsansprüche 14 oder 15, **dadurch gekennzeichnet, dass** durch die Unterteilung des Prozessmodells in Teilprozessmodelle Inkonsistenzen und Unvollständigkeiten im Prozessmodell erkennbar sind.

17. Vorrichtung nach einem der vorhergehenden Vorrichtungsansprüche, **dadurch gekennzeichnet, dass** mittels einer mit der Vorrichtung gekoppelten Eingabevorrichtung die Knoten und Kanten des Prozessmodells eingegeben, verändert und gelöscht werden können.

18. Vorrichtung nach dem vorhergehenden Anspruch, **dadurch gekennzeichnet, dass** mittels der Eingabevorrichtung die Unterteilung des Prozessmodells in Teilprozessmodelle durchführbar ist.

19. Vorrichtung nach dem vorhergehenden Anspruch 17 oder 18, **dadurch gekennzeichnet, dass** mittels der Eingabevorrichtung verschiedene Ansichten auf das Prozessmodelle und gegebenenfalls auf dessen Teilprozessmodelle auswählbar sind.

20. Computerprogramm mit Mitteln zur Durchführung des Verfahrens nach einem der vorgenannten Verfahrensansprüche, wenn das Computerprogramm in Mitteln der Vorrichtung nach einem der vorgenannten Vorrichtungsansprüche zur Ausführung gebracht wird.

## Claims

1. Method for designing a production process for producing a product made up of a plurality of subproducts in a production system (PS) having a plurality of production modules (PM1, PM2, PM3), having the following steps:
- generating a process model (PMOD) using data about production steps (P1, P2, P3, P4) to be carried out for the product and the subproducts thereof,
- from which process model at least some of the data about at least one production step are read and a respective production module that is available for carrying out the respective production step and associated therewith is ascertained and
- using a signal connection (S) to provide instructions (A) that correspond to the respective production step for the production module (e.g. PM1),
**characterized in that**
the process model is represented by a graph that comprises a plurality of nodes connected by edges, each node describing a process step and the nodes being connected to one another by the edges in such a way that the dependencies that exist between the production steps are graphically represented by means of the edges, wherein
the arrangement of the edges reflects a partial ordering.

2. Method according to the preceding claim, **characterized in that** if a first edge is placed upstream of a node and a second edge is placed downstream of the same node, the process step represented by the first edge needs to be carried out before the process step represented by the second edge.

3. Method according to the preceding claim, **characterized in that** in addition to the upstream and downstream placement of an edge, a condition under which the first process step needs to be carried out before the second process step can be specified.

4. Method according to any one of the preceding claims, **characterized in that** the type of the process step and the objects required for the production of a subproduct are specified in the nodes.

5. Method according to any one of the preceding claims, **characterized in that** the nodes, edges and descriptions of the nodes and edges are formalized in such a way that the process model is machine-readable.

6. Method according to any one of the preceding claims, **characterized in that** the process model can be divided into sub-process models.

7. Method according to any one of the preceding claims, **characterized in that** the subdivision of the process model into sub-process models is performed by means of the so-called Min-Cut algorithm.

8. Method according to either one of preceding Claims 6 and 7, **characterized in that** the subdivision of the process model into sub-process models allows inconsistencies and incompletenesses in the process model to be identified.

9. Device for designing a production process for producing a product made up of a plurality of subproducts in a production system (PS) having a plurality of production modules, having:
- a generating unit (E) for generating a process model (PMOD) using data about production steps (P1, P2, P3, P4) to be carried out for the product and the subproducts thereof,
- from which process model it is possible to read data about at least one production step and to ascertain a respective production module that is available for carrying out the respective production step and associated therewith, and
- a providing unit for using a signal connection (S) to provide instructions (A) that correspond to the respective production step for the production module (e.g. PM1),
**characterized in that**
the process model is represented by a graph that comprises a plurality of nodes connected by edges, each node describing a process step and the nodes being connected to one another by the edges in such a way that the dependencies that exist between the production steps are graphically represented by means of the edges, wherein
the arrangement of the edges reflects a partial ordering.

10. Device according to the preceding claim, **characterized in that** if a first edge is placed upstream of a node and a second edge is placed downstream of the same node, the process step represented by the first edge needs to be carried out before the process step represented by the second edge.

11. Device according to the preceding claim, **characterized in that** in addition to the upstream and downstream placement of an edge, a condition under which the first process step needs to be carried out before the second process step can be specified.

12. Device according to any one of the preceding device claims, **characterized in that** the type of the process step and the objects required for the production of a subproduct are specified in the nodes.

13. Device according to any one of the preceding device claims, **characterized in that** the nodes, edges and descriptions of the nodes and edges are formalized in such a way that the process model is machine-readable.

14. Device according to any one of the preceding device claims, **characterized in that** the process model can be divided into sub-process models.

15. Device according to any one of the preceding device claims, **characterized in that** the subdivision of the process model into sub-process models can be performed by means of the so-called Min-Cut algorithm.

16. Device according to either one of preceding device Claims 14 and 15, **characterized in that** the subdivision of the process model into sub-process models allows inconsistencies and incompletenesses in the process model to be identified.

17. Device according to any one of the preceding device claims, **characterized in that** the nodes and edges of the process model can be entered, modified and deleted by means of an input device coupled to the device.

18. Device according to the preceding claim, **characterized in that** the subdivision of the process model into sub-process models can be performed by means of the input device.

19. Device according to preceding Claim 17 or 18, **characterized in that** different views of the process model and, if appropriate, the sub-process models thereof can be selected by means of the input device.

20. Computer program with means for performing the method according to any one of the aforementioned method claims when the computer program is executed in means of the device according to any one of the aforementioned device claims.

## Revendications

1. Procédé de conception d'un procédé de production pour la production d'un produit composé de plusieurs produits partiels dans un système (PS) de production ayant plusieurs modules (PM1, PM2, PM3) de production, comportant les stades suivants :
- on produit un modèle (PMOD) de procédé ayant des données sur des stades (P1, P2, P3, P4) de production à exécuter pour le produit et ses produits partiels,
- dans lequel on lit au moins une partie des données sur au moins un stade de production et on détermine respectivement un module de production disponible pour effectuer le stade de production respectif et associé et
- on met à disposition par une liaison (S) de signal des instructions (A), correspondant au stade de production respectif, pour le module (par exemple PM1) de production,
**caractérisé en ce que**
on représente le modèle de procédé par un graphe, qui comprend une pluralité de nœuds reliés par des arêtes, chaque nœud décrivant un stade du procédé et les nœuds étant reliés entre eux par les arêtes de manière à représenter graphiquement à l'aide des arêtes les relations existantes entre les stades de production, dans lequel
la disposition des arêtes reflète un ordre partiel.

2. Procédé suivant la revendication précédente, **caractérisé en ce que**, lorsqu'une première arête est mise devant un nœud et lorsqu'une deuxième arête est mise derrière le même nœud, le stade du procédé représenté par la première arête doit être effectué avant le stade de procédé représenté par la deuxième arête.

3. Procédé suivant la revendication précédente, **caractérisé en ce que**, en outre pour la mise avant et après d'une arête, il peut être prescrit une condition suivant laquelle le premier stade du procédé doit être effectué avant le deuxième stade du procédé.

4. Procédé suivant l'une des revendications précédentes, **caractérisé en ce que** l'on indique dans les nœuds le type du stade de procédé et les objets nécessaires à la production d'un produit partiel.

5. Procédé suivant l'une des revendications précédentes, **caractérisé en ce que** les nœuds, les arêtes et les descriptions des nœuds et arêtes sont formalisées de manière à ce que le modèle de procédé puisse être déchiffrable par ordinateur.

6. Procédé suivant l'une des revendications précédentes, **caractérisé en ce que** le modèle de procédé peut être subdivisé en des modèles de procédé partiel.

7. Procédé suivant l'une des revendications précédentes, **caractérisé en ce que** l'on effectue la subdivision du modèle de procédé en des modèles de procédé partiel au moyen de ce que l'on appelle l'algorithme min-cut.

8. Procédé suivant l'une des revendications 6 ou 7 précédentes, **caractérisé en ce que**, par la subdivision du modèle de procédé en des modèles de procédé partiel, des inconsistances et des lacunes du modèle de procédé peuvent être détectées.

9. Dispositif de conception d'un procédé de production pour produire un produit composé de plusieurs produits partiels dans un système (PS) de production ayant plusieurs modules de production, comportant :
- une unité (E) de production pour produire un modèle (PMOD) de procédé ayant des données sur des stades (P1, P2, P3, P4) de production à effectuer pour le produit et ses produits partiels,
- à partir duquel on peut lire des données sur au moins un stade de production et on peut déterminer respectivement un module de production disponible pour effectuer le stade de production respectif et associé, et
- une unité de mise à disposition pour la mise à disposition par une liaison (S) de signal d'instructions (A), correspondant au stade de production respectif, pour le module (par exemple PM1) de production,
**caractérisé en ce que**
le modèle de procédé est représenté par un graphe, qui comprend une pluralité de nœuds reliés par des arêtes, chaque nœud décrivant un stade du procédé et les nœuds étant reliés entre eux par les arêtes de manière à représenter graphiquement à l'aide des arêtes les dépendances existant entre les stades de production, dans lequel
la disposition des arêtes reflète un ordre partiel.

10. Dispositif suivant la revendication précédente, **caractérisé en ce que** lorsqu'une première arête est mise devant un nœud et lorsqu'une deuxième arête est mise derrière le même nœud, le stade du procédé représenté par la première arête doit être effectué avant le stade de procédé représenté par la deuxième arête.

11. Dispositif suivant la revendication précédente, **caractérisé en ce que**, en outre il peut être prescrit pour la mise avant et après d'une arête une condition suivant laquelle le premier stade du procédé doit être effectué avant le deuxième stade du procédé.

12. Dispositif suivant l'une des revendications précédentes de dispositif, **caractérisé en ce que** dans les nœuds, sont indiqués le type du stade de procédé et les objets nécessaires à la production d'un produit partiel.

13. Dispositif suivant l'une des revendications précédentes de dispositif, **caractérisé en ce que** les nœuds, les arêtes et les descriptions des nœuds et arêtes sont formalisées de manière à ce que le modèle de procédé puisse être déchiffrable par ordinateur.

14. Dispositif suivant l'une des revendications précédentes de dispositif, **caractérisé en ce que** le modèle de procédé peut être subdivisé en des modèles de procédé partiel.

15. Dispositif suivant l'une des revendications précédentes de dispositif, **caractérisé en ce que** la subdivision du modèle de procédé en modèles de procédé partiel peut être effectuée au moyen de ce que l'on appelle l'algorithme min-cut.

16. Dispositif suivant l'une des revendications 14 ou 15 précédentes de dispositif, **caractérisé en ce que** par la subdivision du modèle de procédé en des modèles de procédé partiel, des inconsistances et des lacunes du modèle de procédé peuvent être détectées.

17. Dispositif suivant l'une des revendications 14 ou 15 précédentes de dispositif, **caractérisé en ce qu'**au moyen d'un dispositif d'entrée couplé au dispositif, les nœuds et les arêtes du modèle de procédé peuvent être entrés, modifiés et effacés.

18. Dispositif suivant la revendication précédente, **caractérisé en ce qu'**au moyen du dispositif d'entrée, la subdivision du modèle de procédé en des modèles de procédé partiel peut être effectuée.

19. Dispositif suivant l'une des revendications 17 ou 18 précédentes, **caractérisé en ce qu'**au moyen du dispositif d'entrée des vues différentes sur le modèle de procédé et le cas échéant sur ses modèles de procédé partiel peuvent être sélectionnées.

20. Programme d'ordinateur ayant des moyens pour effectuer le procédé suivant l'une des revendications précédentes de procédé, lorsque le programme d'ordinateur est mis dans des moyens du dispositif suivant l'une des revendications précédentes de dispositif en vue d'être effectué.
